# EUROPÄISCHE PATENTSCHRIFT

(11) **EP 1 971 505 B1**
(45) Veröffentlichungstag und Bekanntmachung des Hinweises auf die Patenterteilung: **01.12.2010**
(21) Anmeldenummer: 07700226.9
(22) Anmeldetag: 10.01.2007
(51) Int. Cl.: B60R 21/217

(54) **GASSACKBEFESTIGUNG IN EINEM AIRBAGMODUL MITTELS EINER KLEMMVERBINDUNG**
FASTENING A GAS BAG IN AN AIRBAG MODULE BY MEANS OF A CLAMPING CONNECTION
FIXATION DE SAC A GAZ DANS UN MODULE D'AIRBAG AU MOYEN D'UNE LIAISON SERREE

(30) Priorität: 13.01.2006 DE 202006000843 U
(43) Veröffentlichungstag der Anmeldung: 24.09.2008
(73) Patentinhaber: Takata-Petri AG, 63743 Aschaffenburg (DE)
(72) Erfinder: SAUER, Frank, 63843 Aschaffenburg (DE)
(74) Vertreter: Baumgärtel, Gunnar
(86) Internationale Anmeldenummer: PCT/EP2007/000368
(87) Internationale Veröffentlichungsnummer: WO 2007/082723

(56) Entgegenhaltungen:
- EP-A- 0 802 089
- DE-U1- 20 317 611
- DE-U1- 29 519 700
- JP-A- 6 001 189
- US-A- 5 560 643
- US-A- 5 577 763

## Beschreibung

Die Erfindung betrifft eine Gassackbefestigung in einem Airbagmodul mittels einer Klemmverbindung nach dem Oberbegriff des Anspruchs 1.

Gassackbefestigungen mittels einer Klemmverbindung, bei dem der Gassack ohne eine durch den Gassackrand verlaufende Schraubverbindung gehalten wird, sind in unterschiedlichen Ausführungsformen bekannt. So ist aus dem US-Patent 5 931 491 eine Gassackbefestigung bekannt, bei der der Einblasmund des Gassacks zwischen dem unteren Rand des Gasgenerators und dem unteren Rand des Airbaggehäuses verläuft und mittels einer Klammer, die das Airbaggehäuse außen umgreift, zwischen diesen Bauteilen geklemmt wird. Der Nachteil dieser Anordnung besteht darin, dass für das Klemmen des Gassacks die Enden der Klammer miteinander verschraubt werden müssen, um eine ausreichende Klemmwirkung zu erzielen.

Weiterhin ist aus dem US-Patent 5 826 913 eine Airbagbefestigung mit einem Klemmring bekannt. Bei dieser Anordnung ist am Rand des Einblasmundes des Gassacks ein Haltering vorgesehen. Der Rand des Einblasmundes des Gassacks umschlingt den Haltering, der mittels eines Klemmringes gegen eine Montageplatte gedrückt wird, so dass der Rand des Gassacks fixiert ist. Diese Anordnung weist den Nachteil auf, dass der Klemmring eine komplizierte Form aufweist, die mehrere Tiefziehvorgänge erfordert.

Schließlich ist aus dem US-Patent 5 577 763 ein Airbagmodul bekannt, bei dem am Rand des Einblasmundes ein Haltering mit Kreisquerschnitt eingenäht ist. Dieser ist nach der Montage des Gassacks zwischen einer Trägerplatte und einem Klemmring eingeklemmt, der partiell dem Querschnitt des Halteringes angepasst ist. Bei dieser Anordnung weisen sowohl der Klemmring als auch die Montageplatte eine komplizierte Form auf.

Der Erfindung liegt die Aufgabe zugrunde, die Befestigung des Einblasmundes eines Gassacks in einem Airbagmodul durch Klemmung zu vereinfachen.

Erfindungsgemäß wird das gemäß den Merkmalen des Anspruchs 1 erreicht.

Bei einer Gassackbefestigung in einem Airbagmodul mittels einer Klemmverbindung, wobei das Airbagmodul mit einem Haltering für einen Einblasmund des Gassack in einem beide umgebenden Airbagbehältnis angeordnet ist, weist erfindungsgemäß der Haltering an seiner Außenseite in der bei der Entfaltung des Gassacks auftretenden Hauptzugrichtung eine sich verringernde Breite auf. Weiterhin weist das Airbagbehältnis oder ein Bauteil, das diesem zugeordnet ist, oberhalb des Halteringes zumindest abschnittsweise eine geringere Breite als die größte Breite des Halteringes auf und das untere Ende des Gassacks, das den Einblasmund bildet, ist um den Haltering gestülpt und verläuft zwischen dem Haltering und dem Airbagbehältnis oder dem zugeordneten Bauteil.

Diese Anordnung weist den Vorteil auf, dass wegen der besonderen Querschnittsform des Halteringes das Airbagbehältnis für die Klemmverbindung genutzt werden kann. Es ist also kein zusätzlicher Klemmring erforderlich, der unabhängig vom Airbagbehältnis angeordnet ist. Der weitere wesentliche Vorteil besteht darin, dass die erfindungsgemäße Anordnung selbsthemmend arbeitet. Je höher die Zugkraft des sich entfaltenden Gassacks ist, desto höher ist der resultierende Druck auf den geklemmten Gassack, so dass der selbsthemmende Formschluss des Gassacks gewährleistet ist.

Bei einer bevorzugten Ausführungsform weist der Haltering im Querschnitt an seiner Außenseite mindestens einen sich in der bei Entfaltung des Gassacks auftretenden Hauptzugrichtung konisch verjüngten Abschnitt auf, dem ein zumindest annähernd in gleicher Richtung verlaufender Abschnitt der Innenwand des Airbagbehältnisses oder des zugeordneten Bauteils zugeordnet ist. In der Hauptzugrichtung weist also der Haltering einen zunehmend geringeren Außendurchmesser bzw. eine sich verringernde Breite auf, und auch der in gleicher Richtung verlaufende Abschnitt der Innenwand des Airbagbehältnisses weist in Hauptzugrichtung eine sich entsprechend verringernde Breite auf.

Bevorzugt ist der Haltering kreisringförmig ausgeführt. Er kann aber auch rechteckförmig oder oval ausgeführt sein.

Um das Einführen des Halteringes in das Airbagbehältnis in einfacher Weise zu ermöglichen, können unterschiedliche Ausführungen vorgesehen sein. So ist in einer Ausführungsform vorgesehen, dass der dem Haltering zugeordnete Abschnitt des Airbagbehältnisses als mindestens ein gesondertes, in das Airbagbehältnis nach der Einführung des Halteringes mit dem Gassack einsetzbares Bauteil ausgebildet ist. Vorzugsweise ist dieses Bauteil mit dem Airbagbehältnis verrastbar.

Das einsetzbare Bauteil ist vorzugsweise als Ring ausgebildet. Zu seiner Befestigung im Airbagbehältnis weist das einsetzbare Bauteil vorzugsweise Rasthaken auf, denen Nuten im Airbagbehältnis zugeordnet sind. Die Rasthaken können sowohl als Einzelhaken, die im Abstand zueinander angeordnet sind, als auch ringförmig ausgebildet sein.

In einer weiteren Ausführungsform, die insbesondere bei rechteckigen Halteringen für Beifahrerairbags zweckmäßig ist, weist das Airbagbehältnis für das Einführen des Halteringes an einer Seite eine Öffnung auf, die mit einem Deckel verschließbar ist. Es ist zweckmäßig, dass die Innenwand des Deckels den gleichen Verlauf wie die gegenüberliegende Wand des Airbagbehältnisses aufweist, so dass das Airbagbehältnis auch in diesem Bereich oberhalb des Halteringes eine geringere Breite als die größte Breite des Halteringes aufweist.

Bei Verwendung eines kreisringförmigen Halteringes, der insbesondere für Fahrerairbags bestimmt ist, können das Airbagbehältnis und der Haltering Abschnitte aufweisen, die die Befestigung des Halteringes im Airbagbehältnis nach Art eines Bajonettverschlusses ermöglichen. Dabei wird der Haltering mit dem umgestülpten Ende des Gassacks in das Airbagbehältnis eingeführt und anschließend verdreht, so dass Abschnitte des Halteringes unter entsprechende Abschnitte des Airbagbehältnisses greifen.

Es ist zweckmäßig, dass der Einblasmund des Gassacks schlauchförmig ausgebildet ist.

Die erfindungsgemäße Anordnung ist besonders vorteilhaft bei evakuierten Gassackpaketen einsetzbar.

Die Erfindung soll in Ausführungsbeispielen anhand von Zeichnungen erläutert werden. Es zeigen:
- Fig. 1 - 3: den Montageablauf für einen Gassacks unter Verwendung der erfindungsgemäßen Anordnung;
- Fig. 4 - 6: Ausführungsformen, bei denen Halteringe unterschiedliche Querschnitte aufweisen;
- Fig. 5, 6: zeigen von den Ansprüchen nicht gedechte Ausführungs formen.
- Fig. 7: eine weitere Ausführungsform des Airbaggehäuses;
- Fig. 8: eine Draufsicht auf ein Airbagbehältnis mit Deckel für einen Beifahrerairbag;
- Fig. 9: einen Schnitt IX-IX durch die Fig. 8;
- Fig. 10: eine Draufsicht auf ein Airbagbehältnis für einen Fahrerairbag;
- Fig. 11: einen Schnitt XI-XI durch die Fig. 10;
- Fig. 12: eine Draufsicht auf einen Haltering für das Airbagbehältnis nach Fig. 10:
- Fig. 13: einen Schnitt XIII-XIII durch die Fig. 12
- Fig. 14: einen Schnitt XIV-XIV durch die Fig. 12.

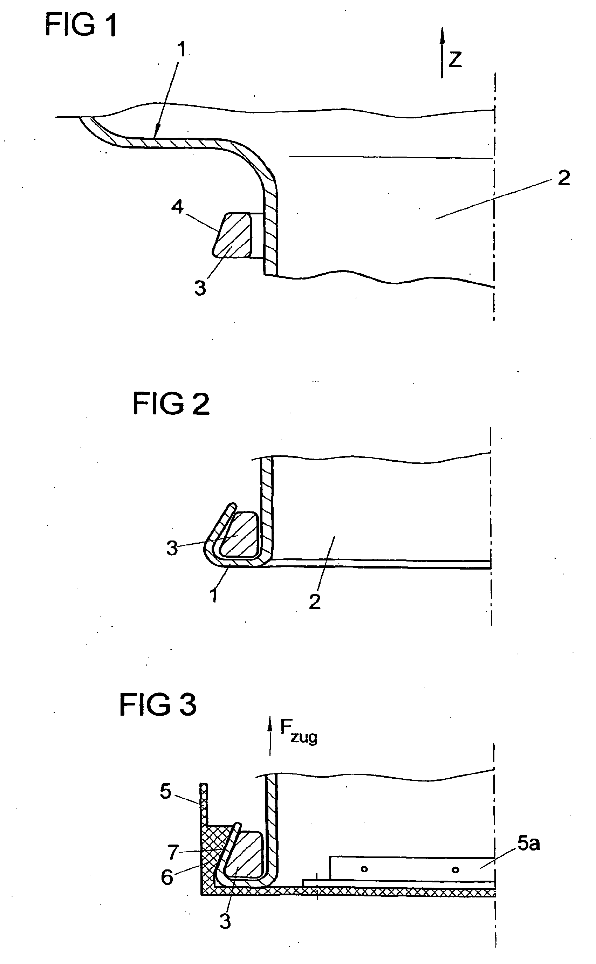

In der Fig. 1 ist ein Teil eines Gassack 1 mit einem schlauchartigen Einblasmund 2 dargestellt, dem ein Haltering 3 zugeordnet ist. Dieser Haltering 3 weist an seiner Außenseite eine Schräge 4 auf, die so verläuft, dass dieser Haltering in der bei der Entfaltung des Gassacks 1 auftretenden Hauptzugrichtung Z eine sich verringernde Breite aufweist. Bei der Montage des Gassacks wird in einem ersten Schritt der Einblasmund 2 des Gassacks 1 durch den Haltering 3 geführt, wie es in der Fig. 1 dargestellt ist. Anschließend wird das Ende des Einblasmundes um den Haltering 3 gestülpt, wie es in der Fig. 2 dargestellt ist.

Ein Airbagbehältnis 5 weist einen Abschnitt 6 auf, der auf der dem Haltering zugekehrten Seite einen sich in gleicher Richtung wie der Haltering 3 verändernde Breite aufweist, so dass die Schräge 4 des Halteringes 3 und eine Schräge 7 am Abschnitt 6 des Airbagbehältnisses 5 etwa parallel verlaufen. Die Befestigung des Gassacks 1 im Airbagbehältnis erfolgt nun dadurch, dass der Haltering mit dem umgestülpten Ende des Einblasmundes 2, wie es in der Fig. 2 dargestellt ist, in den Bereich des Abschnitts 6 gedrückt wird, bis die Endlage erreicht ist, die in Fig. 3 dargestellt ist. Ein Gasgenerator 5a kann bei dieser Anordnung und in den folgenden Ausführungen in der in der Fig. 3 dargestellten Lage angeordnet sein.

Bei der Entfaltung des Gassacks 1 wird infolge der Zugkraft F_{zug} der Haltering 3 gegen den Abschnitt 6 gedrückt. Das zwischen diesen beiden liegende Ende des Einblasmundes 2 wird dabei eingeklemmt. Dabei arbeitet diese Anordnung selbsthemmend. Denn je höher die Zugkraft F_{zug} des sich entfaltenden Gassacks wird, desto höher wird der resultierende Druck auf das geklemmte Ende des Einblasmundes.

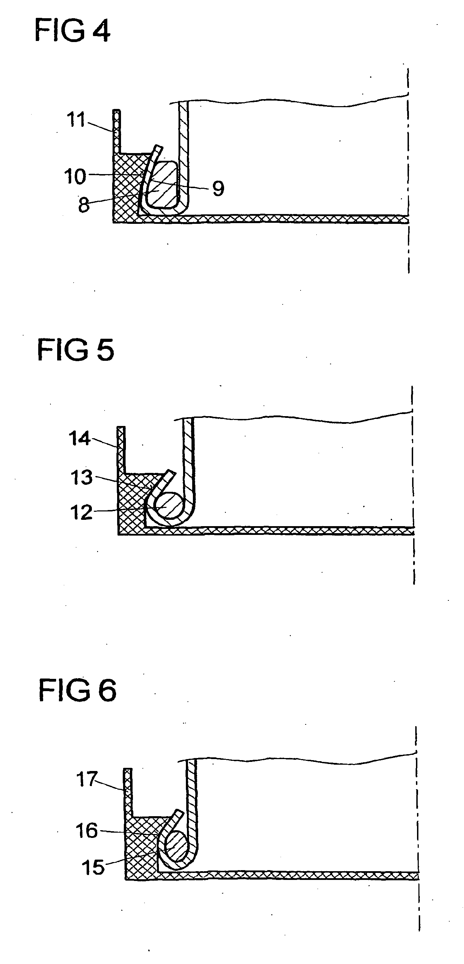

Die erfindungsgemäße Anordnung ist auch mit Halteringen möglich, die eine andere Querschnittsform aufweisen, als die in den Figuren 1 bis 3 dargestellten. So ist in der Fig. 4 ein Haltering 8 dargestellt, der an seiner Außenseite eine gewölbten Abschnitt 9 aufweist. Dieser konvex verlaufenden Wölbung ist ein konkav gewölbter Abschnitt 10 an einem Airbagbehältnis 11 zugeordnet.

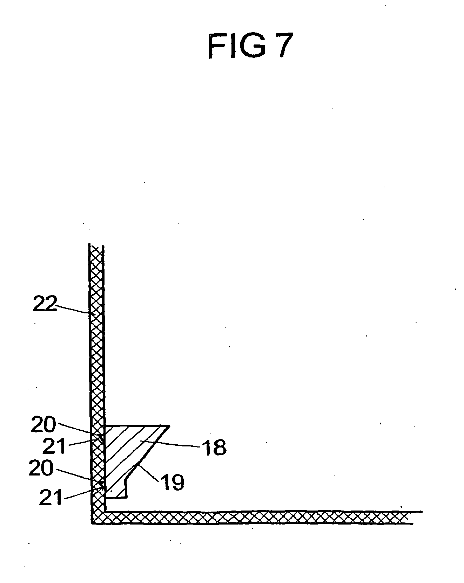

In der Fig. 7 ist eine Ausführungsform dargestellt, bei der der Abschnitt, der dem Haltering zugeordnet ist, als gesonderter Ring 18 ausgebildet ist. Dieser weist ebenfalls eine dem Haltering zugeordnete Fläche auf, die im vorliegenden Ausführungsbeispiel als Schräge 19 ausgebildet ist. Weiterhin weist der Ring 18 elastisch verformbare Rasthaken 20 auf, denen Nuten 21 im Airbagbehältnis 22 zugeordnet sind. Die Rasthaken können sowohl als Einzelhaken in bestimmten Abständen am Ring 18 angeordnet sein, als auch ringförmig umlaufend vorgesehen sein.

Die Montage des Gassacks erfolgt bei dieser Ausführungsform analog zu der in den Figuren 1 und 2 dargestellten Weise, d.h., der Haltering mit dem umgestülpten Ende des Einblasmundes wird in das Airbagbehältnis 22 bis in den Bereich der Nuten 21 gedrückt. Anschließend wird der Ring 18 in das Airbagbehältnis 22 eingeführt, bis die Rasthaken 20 in die Nuten 21 einrasten und der Haltering damit in seiner Lage positioniert ist. Damit ist der Gassack zwischen dem Haltering und dem Ring 18 geklemmt.

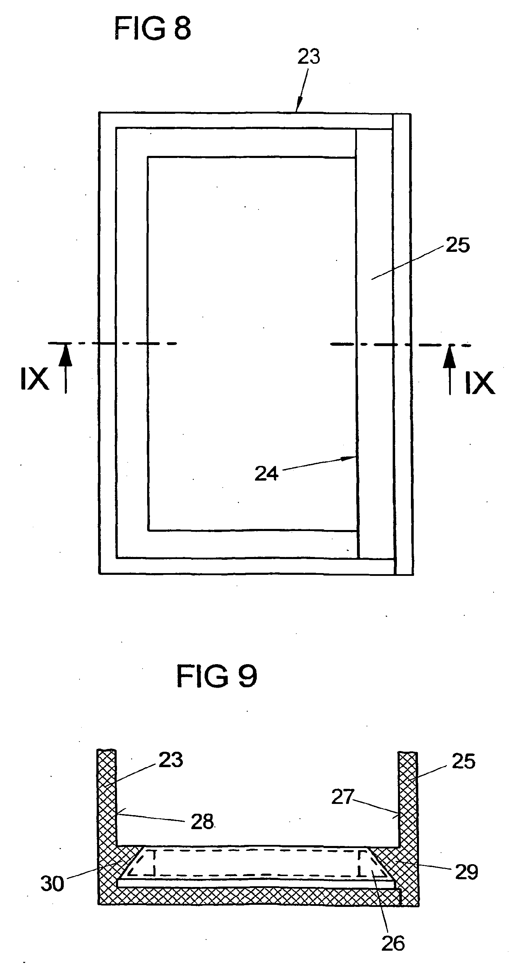

Das in der Fig. 8 dargestellte Airbagbehältnis 23 für einen Beifahrerairbag weist an einer Seite eine Öffnung 24 auf, die durch einen Deckel 25 verschließbar ist. Der in diesem Fall rechteckige Haltering 26, der in der Fig. 9 durch gestrichelte Linien in der Seitenansicht dargestellt ist, mit dem umgestülpten Ende des Gassacks wird bei dieser Ausführungsform durch die Öffnung 24 in das Airbagbehältnis 23 eingeführt. Anschließend wird der Deckel aufgesetzt, so dass das Airbagbehältnis 23 seitlich verschlossen ist, wie es in den Figuren 8 und 9 dargestellt ist. Der Deckel kann durch Schrauben oder auch mittels einer Rastverbindung am Airbagbehältnis befestigt werden. Insbesondere aus der Fig. 9 ist ersichtlich, dass die Innenwand 27 des Deckels 25 den gleichen Verlauf hat, wie die gegenüberliegende Innwand 28 des Airbaggehäuses, d. h., dass der Deckel einen schräg in das Airbagbehältnis hinein verlaufenden Abschnitt 29 aufweist, der dem schräg in das Airbagbehältnis hinein verlaufenden Abschnitt 30 des Airbagbehältnisses 23 gegenüberliegt. Mittels dieser Abschnitte wird der Haltering 26 mit konischem Querschnitt im Airbagbehältnis 23 gehalten.

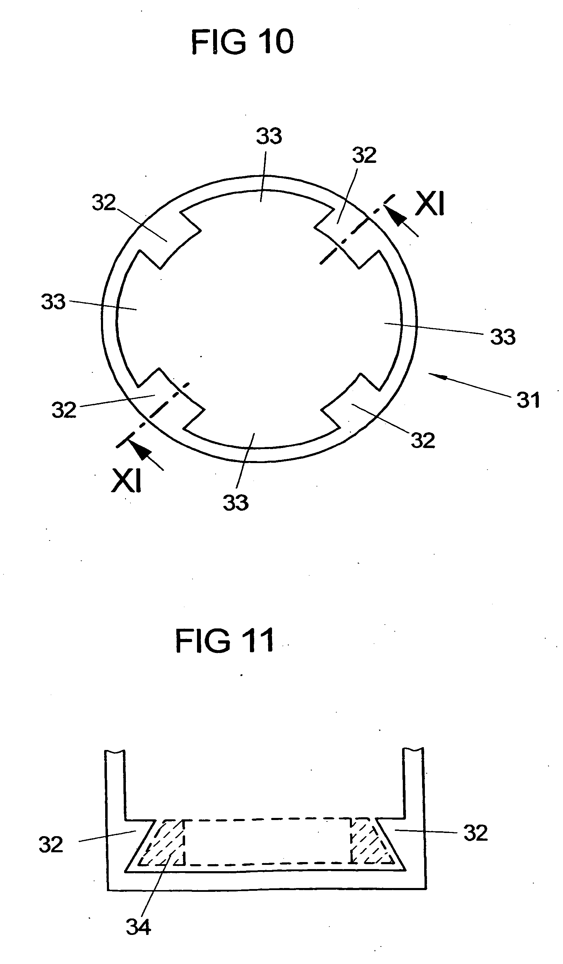

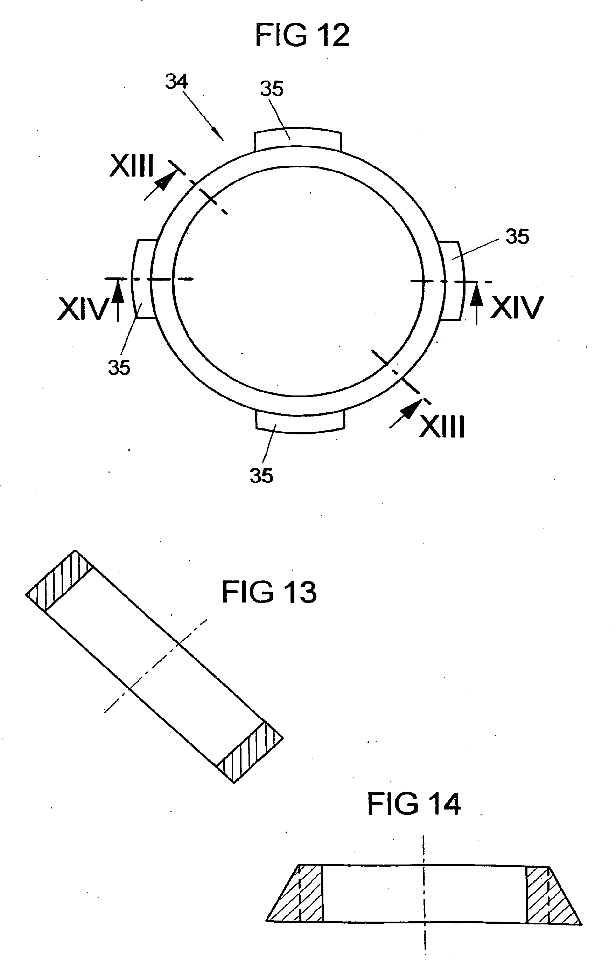

In den Figuren 10 und 11 ist ein Airbagbehältnis 31 für einen Fahrerairbag dargestellt. Dieses Airbagbehältnis weist schräg in dieses hinein verlaufende Abschnitte 32 auf, die im Abstand zueinander angeordnet sind, so dass Zwischen- räume 33 vorhanden sind, in denen die Innenwand des Airbagbehältnisses 31 parallel zu deren Außenwänden verläuft. Diesem Airbagbehältnis 31 ist ein Haltering 34 zugeordnet, der im Abstand zueinander angeordnete Abschnitte 35 aufweist, die die radiale Breite der Abschnitte 32 des Airbagbehältnisses 31 aufweisen und von unten nach oben einen konisch verjüngten Querschnittsverlauf haben, wie es aus der Fig. 14 ersichtlich ist. Zwischen den Abschnitten 35 verläuft die Außenwand des Halteringes 34 parallel zu dessen Innenwand, wie es aus der Fig. 13 ersichtlich ist.

Bei dieser Ausführungsform wird der Haltering 34 mit dem umgestülpten Ende des Gassacks so in das Airbagbehältnis 31 eingesetzt, dass dessen Abschnitte 35 in den Zwischenräumen 33 des Airbagbehältnisses 31 liegen. Anschließend wird der Haltering 34 gedreht, bis dessen Abschnitte 35 vollständig im Bereich der Abschnitte 32 des Airbagbehältnisses 31 liegen, wie es aus der Fig. 11 ersichtlich ist. Damit ist der Gassack im Bereich der Abschnitte 32, 35 in gleicher Weise durch Klemmung befestigt wie bei den vorhergehenden Ausführungsbeispielen.

## Patentansprüche

1. Gassackbefestigung in einem Airbagmodul mittels einer Klemmverbindung, wobei das Airbagmodul mit einem Haltering für einen Einblasmund des Gassacks in einem beide umgebenden Airbagbehältnis angeordnet sind, dass der Haltering an seiner Außenseite in der bei der Entfaltung des Gassacks auftretenden Hauptzugrichtung eine sich verringernde Breite aufweist, dass das Airbagbehältnis oder ein Bauteil, das diesem zugeordnet ist, oberhalb des Halteringes zumindest abschnittsweise eine geringere Breite als die größte Breite des Halteringes aufweist und dass das untere Ende des Gassacks, das den Einblasmund bildet, um den Haltering gestülpt ist und zwischen dem Haltering und dem Airbagbehältnis oder dem zugeordneten Bauteil verläuft,
**dadurch gekennzeichnet,**
**dass** der Haltering (3) im Querschnitt an seiner Außenseite mindestens einen sich in der bei Entfaltung des Gassacks auftretenden Hauptzugrichtung (Z) konisch verjüngten Abschnitt (4) aufweist, dem ein zumindest annähernd in gleicher Richtung verlaufender Abschnitt (7) der Innenwand des Airbagbehältnisses (5) oder eines der Innenwand zugeordneten Bauteils (18) zugeordnet ist.

2. Gassackbefestigung nach Anspruch 1, **dadurch gekennzeichnet, dass** der Haltering (5, 11, 14, 17) kreisringförmig, rechteckförmig oder oval ausgeführt ist.

3. Gassackbefestigung nach Anspruch 1 oder 2, **dadurch gekennzeichnet, das** der dem Haltering (5, 11, 14, 17) zugeordnete Abschnitt des Airbagbehältnisses (22) als mindestens ein gesondertes in das Airbagbehältnis (22) nach der Einführung des Halteringes (5, 11, 14, 17) mit dem Gassack (1) einsetzbares Bauteil (18) ausgebildet ist.

4. Gassackbefestigung nach Anspruch 3, **dadurch gekennzeichnet, dass** das einsetzbare Bauteil (18) mit dem Airbagbehältnis (22) verrastbar ist.

5. Gassackbefestigung nach Anspruch 3 oder 4, **dadurch gekennzeichnet, dass** das einsetzbare Bauteil als Ring (18) ausgebildet ist.

6. Gassackbefestigung nach mindestens einem der Ansprüche 3 bis 5, **dadurch gekennzeichnet, dass** das einsetzbare Bauteil (18) Rasthaken (20) aufweist, denen Nuten (21) im Airbagbehältnis (22) zugeordnet sind.

7. Gassackbefestigung nach mindestens einem der Ansprüche 3 bis 6, **dadurch gekennzeichnet, dass** die Rasthaken (20) als Einzelhaken ausgebildet sind, die im Abstand zueinander angeordnet sind.

8. Gassackbefestigung nach mindestens einem der Ansprüche 3 bis 7, **dadurch gekennzeichnet, dass** die Rasthaken (20) ringförmig ausgebildet sind.

9. Gassackbefestigung nach Anspruch 1 oder 2, **dadurch gekennzeichnet, dass** das Airbagbehältnis (23) für das Einführen des Halteringes (26) an einer Seite eine Öffnung (24) aufweist, die mit einem Deckel (25) verschließbar ist.

10. Gassackbefestigung nach Anspruch 9, **dadurch gekennzeichnet, dass** die Innenwand (27) des Deckels (25) den gleichen Verlauf wie die gegenüberliegende Wand (28) des Airbagbehältnisses (23) aufweist.

11. Gassackbefestigung nach Anspruch 1 oder 2, **dadurch gekennzeichnet, dass** bei Verwendung eines kreisringförmigen Halteringes (34) das Airbagbehältnis (31) und der Haltering (34) Abschnitte (32 bzw. 35) aufweisen, die die Befestigung des Halteringes (34) im Airbagbehältnis (31) nach Art eines Bajonettverschlusses ermöglichen.

12. Gassackbefestigung nach mindestens einem der vorhergehenden Ansprüche, **dadurch gekennzeichnet, dass** der Einblasmund (2) des Gassacks (1) schlauchförmig ausgebildet ist.

## Claims

1. An airbag fastening in an airbag module by means of a clamping connection, the airbag module being arranged with a retaining ring for an injection orifice of the airbag in an airbag receptacle surrounding both the airbag module and the retaining ring, in that the retaining ring has a reducing width on its outer face in the main pulling direction occurring when the airbag unfolds, in that the airbag receptacle or a component which is associated therewith, has at least partially a smaller width above the retaining ring than the greatest width of the retaining ring and in that the lower end of the airbag, which forms the injection orifice, is folded over the retaining ring and extends between the retaining ring and the airbag receptacle or the associated component,
**characterized in that**
the retaining ring (3) has in cross section on its outer face at least one conically tapered portion (4) in the main pulling direction (Z) occurring when the airbag unfolds, with which a portion (7) of the inner wall of the airbag receptacle (5) which is at least approximately extending in the same direction or a component (18) which is associated to the inner wall is associated.

2. The airbag fastening as claimed in claim 1, **characterized in that** the retaining ring (5, 11, 14, 17) is circular, rectangular or oval.

3. The airbag fastening as claimed in claim 1 or 2, **characterized in that** the portion of the airbag receptacle (22) associated with the retaining ring (5, 11, 14, 17) is configured as at least one separate component (18) which may be inserted with the airbag (1) into the airbag receptacle (22) after introducing the retaining ring (5, 11, 14, 17).

4. The airbag fastening as claimed in claim 3, **characterized in that** the insertable component (18) may be latched to the airbag receptacle (22).

5. The airbag fastening as claimed in claim 3 or 4, **characterized in that** the insertable component is configured as a ring (18).

6. The airbag fastening as claimed in at least one of claims 3 to 5, **characterized in that** the insertable component (18) has latching hooks (20), with which grooves (21) in the airbag receptacle (22) are associated.

7. The airbag fastening as claimed in at least one of claims 3 to 6, **characterized in that** the latching hooks (20) are configured as separate hooks which are arranged spaced apart from one another.

8. The airbag fastening as claimed in at least one of claims 3 to 7, **characterized in that** the latching hooks (20) are of annular configuration.

9. The airbag fastening as claimed in claim 1 or 2, **characterized in that** the airbag receptacle (23) for the insertion of the retaining ring (26) has an opening (24) on one side which may be closed by a cover (25).

10. The airbag fastening as claimed in claim 9, **characterized in that** the inner wall (27) of the cover (25) has the same path as the opposing wall (28) of the airbag receptacle (23).

11. The airbag fastening as claimed in claim 1 or 2, **characterized in that** when using a circular retaining ring (34) the airbag receptacle (31) and the retaining ring (34) have portions (32 and/or 35) which allow the fastening of the retaining ring (34) in the airbag receptacle (31) in the manner of a bayonet closure.

12. The airbag fastening as claimed in at least one of the preceding claims, **characterized in that** the injection orifice (2) of the airbag (1) is of tubular configuration.

## Revendications

1. Fixation d'un coussin à gaz dans un module d'airbag au moyen d'une liaison serrée, dans laquelle le module d'airbag, avec une bague de maintien pour une embouchure de gonflage du coussin à gaz, sont agencés dans un récipient d'airbag qui entoure les deux, que la bague de maintien présente sur son côté extérieur, dans la direction de traction principale qui se produit lors du déploiement du coussin à gaz, une largeur qui se réduit, que le récipient d'airbag, ou un composant qui est associé à celui-ci, présente au-dessus de la bague de maintien au moins par tronçons une largeur inférieure à la plus grande largeur de la bague de maintien, et que l'extrémité inférieure du coussin à gaz, qui forme l'embouchure de gonflage, est retroussée autour de la bague de maintien et s'étend entre la bague de maintien et le récipient d'airbag ou le composant associé à celui-ci,
**caractérisée en ce que**
la bague de maintien (3) présente en coupe transversale au niveau de sa face extérieure au moins un tronçon (4) conique qui va en se rétrécissant dans la direction de traction principale (Z) qui se produit lors du déploiement du coussin à gaz, auquel est associé un tronçon (7), qui s'étend au moins approximativement dans la même direction, de la paroi intérieure du récipient d'airbag (5) ou de l'un des composants (18) associé à la paroi intérieure.

2. Fixation d'un coussin à gaz selon la revendication 1, **caractérisée en ce que** la bague de maintien (5, 11, 14, 17) est réalisée en forme d'anneau circulaire, en forme de rectangle ou en forme ovale.

3. Fixation d'un coussin à gaz selon la revendication 1 ou 2, **caractérisée en ce que** le tronçon, associé à la bague de maintien (5, 11, 14, 17), du récipient d'airbag (22) est réalisé sous forme d'au moins un composant (18) séparé susceptible d'être mis en place dans le récipient d'airbag (22) après l'introduction de la bague de maintien (5, 11, 14, 17) avec le coussin à gaz (1).

4. Fixation d'un coussin à gaz selon la revendication 3, **caractérisée en ce que** le composant (18) susceptible d'être mis en place est enclenché avec le récipient d'airbag (22).

5. Fixation d'un coussin à gaz selon la revendication 3 ou 4, **caractérisée en ce que** le composant susceptible d'être mis en place est réalisé sous forme d'une bague (18).

6. Fixation d'un coussin à gaz selon l'une au moins des revendications 3 à 5, **caractérisée en ce que** le composant (18) susceptible d'être mis en place comprend des crochets d'enclenchement (20) auxquels sont associées des gorges (21) dans le récipient d'airbag (22).

7. Fixation d'un coussin à gaz selon l'une au moins des revendications 3 à 6, **caractérisée en ce que** les crochets d'enclenchement (20) sont réalisés sous forme de crochets individuels qui sont agencés à distance les uns des autres.

8. Fixation d'un coussin à gaz selon l'une au moins des revendications 3 à 7, **caractérisée en ce que** les crochets d'enclenchement (20) sont réalisés en forme de bague.

9. Fixation d'un coussin à gaz selon la revendication 1 ou 2, **caractérisée en ce que** le récipient d'airbag (23) comporte une ouverture (24) pour l'introduction de la bague de maintien (26) sur un côté, ouverture qui est refermée avec un couvercle (25).

10. Fixation d'un coussin à gaz selon la revendication 9, **caractérisée en ce que** la paroi intérieure (27) du couvercle (25) présente le même tracé que la paroi opposée (28) du récipient d'airbag (23).

11. Fixation d'un coussin à gaz selon la revendication 1 ou 2, **caractérisée en ce que** lors de l'utilisation d'une bague de maintien (34) de forme circulaire le récipient d'airbag (31) et la bague de maintien (34) présentent des tronçons (32 et/ou 35) qui permettent la fixation de la bague de maintien (34) dans le récipient d'airbag (31) à la manière d'une fermeture à baïonnette.

12. Fixation d'un coussin à gaz selon l'une au moins des revendications précédentes, **caractérisée en ce que** l'embouchure de gonflage (2) du coussin à gaz (1) est réalisée sous forme de tuyau souple.
